# EUROPÄISCHE PATENTANMELDUNG

(11) **EP 2 255 953 A1**
(43) Veröffentlichungstag der Anmeldung: **01.12.2010**
(21) Anmeldenummer: 10005339.6
(22) Anmeldetag: 21.05.2010
(51) Int. Cl.: B29C 65/18, B29C 61/10, B29K 23/00

(54) **Schweißvorrichtung und schweißverfahren**

(30) Priorität: 27.05.2009 DE 102009022918
(71) Anmelder: Isoplus Fernwärmetechnik GmbH, 99706 Sondershausen (DE)
(72) Erfinder: Hartung, Cartsen, 99713 Grossbrüchter (DE)
(74) Vertreter: Hauck Patent- und Rechtsanwälte

(57) **Zusammenfassung**

Es werden eine mobile Vorrichtung zum Verschweißen der Längsränder einer Schrumpfmuffe mittels Überlappungsstoß und ein Verfahren zum Verschweißen der Längsränder einer Schrumpfmuffe mittels Überlappungsstoß in situ bei verlegten Rohrleitungen beschrieben. Die Schweißvorrichtung weist ein auf das Rohr aufsetzbares Gestellt mit einem eine untere Schweißplatte tragenden Unterteil (2) und einem schwenkbar an einem Ende des Gestells gelagerten Oberteil (4) auf. Das Oberteil weist eine obere Schweißplatte (20), eine am Oberteil angeordnete Anpresseinrichtung zum Anpressen der oberen Schweißplatte (20) gegen die Ränder der entsprechenden Folie (22) und eine am anderen Ende des Gestells angeordnete Einrichtung (11) zum Verriegeln des Oberteiles (4) mit dem Unterteil (2) auf. Bei dem Verfahren wird die Folie um ein Rohr, auf das sie aufgeschrumpft werden soll, mit Abstand zum Rohr gelegt, so dass sich die Längsränder der Folie überlappen, und die sich überlappenden Längsränder der Folie werden zwischen einer unteren und einer oberen Schweißplatte einer auf das Rohr aufgesetzten mobilen Schweißvorrichtung miteinander verschweißt. Mit der Vorrichtung und dem Verfahren gelingt es, die Längsränder von Schrumpfmuffen in situ zu verschweißen. Um die Schrumpfmuffe aufschrumpfen zu können, muss daher kein Rohrende zum Aufschieben einer Schrumpfmuffe mit bereits verschweißten Rändern zu Verfügung stehen.

## Beschreibung

Die vorliegende Erfindung betrifft eine Vorrichtung zum Verschweißen der Längsränder einer Schrumpfmuffe mittels Überlappungsstoß.

Zur Herstellung von Rohrverbindungen ist es bekannt, Muffen zu verwenden, die nach Herstellung der Verbindung zwischen den Rohren auf die Verbindungsstelle geschoben und, ggf. nach Ausschäumen des unter der Muffe befindlichen Ringraumes, um eine entsprechende Wärmedämmung über der Verbindungsstelle vorzusehen, aufgeschrumpft werden. Solche Schrumpfmuffen können dabei im fertigen Zustand, d. h. bereits mit aneinander geschweißten Rändern, auf ein Rohr aufgeschoben und auf die Verbindungsstelle geschoben werden. Sie können aber auch erst an Ort und Stelle verschweißt werden, d. h. in einem bereits um das Rohr gewundenen Zustand. Diese Vorgehensweise hat den Vorteil, dass kein Rohrende benötigt wird, um die Muffe aufzuschieben.

Derartige Schrumpfmuffen bestehen aus einer geeigneten Kunststofffolie, beispielsweise aus vernetztem Polyethylen. Sie dienen zum Abdecken der Verbindungsstellen (Schweißstellen) von Mediumrohren, bei denen es sich beispielsweise um Kunststoffrohre oder um mit Kunststoff ummantelte Stahlrohre handeln kann.

Die Längsränder der Schrumpfmuffe werden im sich überlappenden Zustand miteinander verschweißt. Durch Einwirkung von Wärmeenergie werden hierbei die Längsränder der Schrumpfmuffe teilweise aufgeschmolzen und aneinandergeschmolzen. Im fertigen Zustand entsteht ein Überlappungsstoß.

Der vorliegenden Erfindung liegt die Aufgabe zugrunde, eine Vorrichtung zum Verschweißen der Längsränder einer Schrumpfmuffe zu schaffen, die einfach und kompakt ausgebildet ist und sich durch eine große Mobilität auszeichnet.

Die vorliegende Erfindung basiert auf dem Grundgedanken, eine Schweißvorrichtung zu schaffen, mit der die Längsränder einer Schrumpfmuffe am Rohr selbst miteinander verschweißt werden können. Dabei wird die entsprechende Folie um ein Rohr gelegt, so dass sich ihre beiden Längsränder auf der Oberseite des Rohres miteinander überlappen. Mit der erfindungsgemäß ausgebildeten Schweißvorrichtung, die auf das Rohr aufgesetzt ist, werden dann die Längsränder miteinander verschweißt.

Die vorstehend genannte Aufgabe wird daher erfindungsgemäß durch eine mobile Vorrichtung zum Verschweißen der Längsränder einer Schrumpfmuffe mittels Überlappungsstoß gelöst, wobei die entsprechende Folie lose um ein Rohr, auf das sie aufgeschrumpft werden soll, angeordnet ist, mit einem auf das Rohr aufsetzbaren Gestell mit einem eine untere Schweißplatte tragenden Unterteil und einem schwenkbar an einem Ende des Gestells gelagerten Oberteil, das eine obere Schweißplatte trägt, einer am Oberteil angeordneten Anpresseinrichtung zum Anpressen der oberen Schweißplatte gegen die Längsränder der Folie und einer am anderen Ende des Gestells angeordneten Einrichtung zum Verriegeln des Oberteils mit dem Unterteil.

Die erfindungsgemäß ausgebildete Schweißvorrichtung ist mobil (tragbar) und kann dazu eingesetzt werden, direkt auf der Baustelle entsprechende verschweißte Schrumpfmuffen herzustellen, die dann beispielsweise auf eine Rohrverbindungsstelle geschoben und dort aufgeschrumpft werden. Die Schrumpfmuffe ist nach dem Verschweißen ihrer Längsränder lose, d. h. mit Abstand zum Rohr, auf diesem angeordnet und lässt sich daher ohne Weiteres zu der gewünschten Stelle, an der sie aufgeschrumpft werden soll, verschieben. Um ein derartiges Herstellen der Schrumpfmuffe zu ermöglichen, ist die erfindungsgemäß ausgebildete Schweißvorrichtung klein und kompakt ausgebildet und lässt sich manuell zur jeweiligen Stelle, an der eine Schrumpfmuffe hergestellt werden soll, transportieren. Des Weiteren ist die Handhabung der Schweißvorrichtung einfach, so dass diese für einen insitu-Einsatz besonders gut geeignet ist.

Zur Handhabung wird die erfindungsgemäß ausgebildete schienenförmige Schweißvorrichtung auf die Oberseite eines Rohres aufgesetzt. Das Oberteil der Schweißvorrichtung wird nach oben geschwenkt, und die Folie wird um das Rohr gelegt und mit ihren Längsrändern über der unteren Schweißplatte der Schweißvorrichtung angeordnet. Wenn die Folie die richtige Lage eingenommen hat, d. h. sich deren Längsränder in geeigneter Weise überlappen, wird das Oberteil mit der daran angeordneten oberen Schweißplatte nach unten geschwenkt. Mit Hilfe der vorgesehenen Verriegelungsvorrichtung werden Oberteil und Unterteil miteinander verriegelt. Danach wird die Anpresseinrichtung betätigt, so dass die obere Schweißplatte gegen die sich überlappenden Muffenränder und damit gegen die untere Schweißplatte gepresst wird. Durch Beaufschlagen der beiden Schweißplatten mit Wärmeenergie werden die Muffenränder angeschmolzen und miteinander verschmolzen. Nach Beendigung des Schweißvorganges wird die Anpresseinrichtung deaktiviert, die Verriegelungseinrichtung deaktiviert und das Oberteil nach oben verschwenkt, so dass die hergestellte Schweißverbindung begutachtet werden kann. Die Schweißvorrichtung kann dann in axialer Richtung entfernt werden, wobei das sich unter der Muffe befindende Unterteil axial herausgezogen wird. Die fertig verschweißte Muffe kann dann auf den Ort verschoben werden, auf dem sie aufgeschrumpft werden soll.

Die Länge der erfindungsgemäß ausgebildeten Schweißvorrichtung richtet sich nach der Breite der herzustellenden Muffen. Sie kann beispielsweise 1 m betragen, so dass sich hiermit Muffen mit üblichen Breiten herstellen lassen. Die Breite der Schweißvorrichtung richtet sich nach der Breite der herzustellenden Überlappungsverbindungen. Beispielsweise stellt eine Breite von 15 cm ein geeignetes Maß dar.

Die vorgesehene Verriegelungseinrichtung bewirkt, dass sich das Oberteil während und nach dem Anpressen der oberen Schweißplatte nicht relativ zum Unterteil, d. h. in Aufwärtsrichtung, bewegen kann. Hierdurch wird sichergestellt, dass der gesamte Druck der Anpresseinrichtung auf die obere Schweißplatte gelangt und diese in der gewünschten Weise gegen die Muffenränder und damit gegen die untere Schweißplatte presst.

Die vorstehende Beschreibung zeigt, dass die erfindungsgemäß ausgebildete Schweißvorrichtung einfach und kompakt ausgebildet und einfach zu handhaben ist. Die entsprechenden Handhabungsvorgänge können manuell durchgeführt werden. Hierzu zählen das Aufsetzen der Schweißvorrichtung auf die Oberseite eines Rohres, das Aufschwenken bzw. Aufklappen des Oberteiles mit Anpresseinrichtung und oberer Schweißplatte, das Herunterschwenken bzw. Herunterklappen desselben, das Verriegeln von Oberteil und Unterteil und das Betätigen der Anpresseinrichtung sowie der Schweißplatten, wobei der letztgenannte Vorgang durch die Betätigung von geeigneten Druckknöpfen, Touch-Screen-Feldern etc. von geeigneten Betätigungspaneelen erfolgen kann. Über ein derartiges Paneel können sich ferner geeignete Betriebsparameter der Vorrichtung einstellen lassen, wie Anpressdruck, Schweißdauer, Schweißtemperatur etc.

Bei der erfindungsgemäß ausgebildeten Vorrichtung ist die untere Schweißplatte vorzugsweise am Unterteil fest angebracht, während die obere Schweißplatte senkrecht zur Schweißplattenebene beweglich ist. Eine am Oberteil angeordnete Anpresseinrichtung presst die obere Schweißplatte nach unten gegen die Ränder der Folie.

Die Anpresseinrichtung umfasst vorzugsweise eine relativ zum Oberteil absenkbare und anhebbare Pressplatte, die aus einem elastisch verformbaren Material, insbesondere einem geeignetem Kunststoff, bestehen kann. Zweckmäßigerweise ist die Anpresseinrichtung durch mindestens einen manuell betätigbaren Spannhebel in den Anpresszustand und aus diesem heraus überführbar. Ein solcher, vorzugsweise an der Oberseite des Oberteiles angeordneter Spannhebel ermöglicht eine einfache manuelle Betätigung zur Durchführung des Anpressvorganges der oberen Schweißplatte gegen die Ränder der Folie bzw. die untere Schweißplatte. Beispielsweise kann ein solcher Spannhebel durch Verschwenken eines Handgriffes aus einer senkrechten Stellung in eine horizontale Stellung zum Spannen und durch eine umgekehrte Bewegung zum Entspannen betätigt werden.

Eine besonders bevorzugte Ausführungsform der Vorrichtung zeichnet sich dadurch aus, dass das Oberteil ein U-förmiges Element aufweist, das an seiner Unterseite die Pressplatte mit Schweißplatte trägt und relativ zu einem im U-förmigen Element angeordneten Hauptteil des Oberteiles beweglich ist. Insbesondere ist dabei das Hauptteil mit seitlichen Zapfen in Schlitzführungen des U-förmigen Elementes gelagert. Wird der mindestens eine Spannhebel betätigt, d. h. aus der Vertikalstellung in die Horizontalstellung umgelegt, wird das U-förmige Element mit Pressplatte und Schweißplatte relativ zum Hauptteil des Oberteiles abgesenkt, bis die Zapfen mit den Begrenzungen der Schlitzführungen in Eingriff treten. Durch das Lösen des mindestens einen Spannhebels wird das U-förmige Element mit Pressplatte und Schweißplatte relativ zum Hauptteil wieder nach oben bewegt, was beispielsweise mit Hilfe von geeigneten Federeinrichtungen bewerkstelligt werden kann.

Bei einer anderen Ausführungsform umfasst diese Anpresseinrichtung umfasst vorzugsweise eine durch Beaufschlagung mit einem gasförmigen oder flüssigen Medium dehnbare Einheit. Insbesondere weist die dehnbare Einheit eine Vielzahl von dehnbaren Schläuchen auf. Durch Beaufschlagung dieser Schläuche, die aus einem geeigneten dehnbaren Material, wie Silikon, bestehen, mit einem geeigneten Medium, insbesondere Luft, dehnen sich die Schläuche nach unten aus und beaufschlagen die obere Schweißplatte derart, dass sie nach unten gegen die Ränder der Folie gepresst wird. Zweckmäßigerweise ist dabei eine Reihe von Schläuchen parallel zueinander angeordnet und an einer entsprechenden Halteeinrichtung fixiert. Durch Druckentspannung bzw. Abziehen des Druckmediums ziehen sich die Schläuche wieder zusammen, so dass die obere Schweißplatte wieder nach oben bewegt wird.

Mit der erfindungsgemäß ausgebildeten Vorrichtung werden die Längsränder einer Schrumpfmuffe auf einem Rohr miteinander verschweißt, wobei die Schrumpfmuffe lose auf dem Rohr angeordnet ist. Der Abstand zwischen Rohr und Schrumpfmuffe ist dabei so bemessen, dass die Schrumpfmuffe auf dem Rohr verschiebbar und in einem nachfolgenden Schrumpfvorgang auf eine Rohrverbindungsstelle aufschrumpfbar ist. Um einen korrekten Schweißvorgang zu gewährleisten, weist das Unterteil der Vorrichtung vorzugsweise eine seitliche Schlitzführung zur Durchführung der Schrumpfmuffe und zur Anordnung derselben auf der unteren Schweißplatte auf. Hierdurch wird die Folie bei einem Schweißvorgang gegen Bewegungen in Axialrichtung des Rohres gesichert, so dass kein Verrutschen auftritt und der gewünschte Überlappungsstoß hergestellt werden kann. Es versteht sich, dass eine derartige Schlitzführung vorzugsweise auf beiden Seiten des Unterteiles angeordnet ist.

Ein weiteres bevorzugtes Merkmal der erfindungsgemäß ausgebildeten Vorrichtung besteht darin, dass diese seitlich am Oberteil angeordnete Niederhalter für die Schrumpfmuffe aufweist. Diese Niederhalter bewirken, dass die übereinander angeordneten Längsränder der Folie in der gewünschten Schweißstellung verbleiben und sich nicht bewegen. Vorzugsweise sind auf einer Seite des Oberteiles zwei Niederhalter angeordnet. Hierbei kann es sich um fest angeordnete Elemente handeln, deren Höhe einstellbar ist. Bei einer bevorzugten Lösung weisen die Niederhalter druckbeaufschlagte Elemente auf, die in Höhenrichtung beweglich sind und durch Druckbeaufschlagung nach unten gegen die Schrumpfmuffe gefahren werden können, um die Schrumpfmuffe gegen die untere Schweißplatte zu pressen.

Die Niederhalter wirken vorzugsweise mit einer seitlich am Unterteil angeordneten Klemmschiene zusammen. Beim Legen der Längsränder der Folie zwischen Unterteil und Oberteil der Schweißvorrichtung kommt der eine Randbereich der Folie auf der Klemmschiene zu liegen und wird durch Betätigung der Niederhalter gegen die Klemmschiene gepresst. Auf diese Weise erfolgt eine Fixierung der zu verschweißenden Schrumpfmuffe an der Schweißvorrichtung, so dass Relativbewegungen zwischen Schrumpfmuffe und Schweißvorrichtung vor und während des Schweißvorganges vermieden werden.

Bei einer bevorzugten Ausführungsform der Vorrichtung ist das Unterteil des Gestells gegenüber dem Oberteil nach hinten verlängert und trägt an seinem hinteren Ende ein Gehäuse, das die Steueranlage für die Vorrichtung aufnimmt. Dieses Gehäuse weist einen entsprechenden Stromanschluss auf. Ferner kann das Gehäuse ein geeignetes Bedienungspaneel besitzen, mittels dem die entsprechenden Betriebsparameter (Schweißdauer, Schweißtemperatur, Anpressdruck etc.) eingestellt und die Vorrichtung betätigt werden kann (Aufheizen der Schweißplatten etc.).

Was die schwenkbare Lagerung des Oberteiles relativ zum Unterteil anbetrifft, so ist diese vorzugsweise so realisiert, dass das Oberteil an einer am verlängerten Unterteilabschnitt angeordneten Stütze schwenkbar gelagert ist. Bei der Stütze kann es sich um irgendeinen Abschnitt oder Teil des Unterteiles handeln, der sich von diesem nach oben erstreckt. Vorzugsweise am oberen Ende dieser Stütze ist ein Scharnier angeordnet, mittels dem das Oberteil verschwenkbar ist.

Wie bereits erwähnt, weist die erfindungsgemäß ausgebildete Vorrichtung am vorderen Ende eine Verriegelungseinrichtung auf, mit der Oberteil und Unterteil miteinander verriegelbar sind, um bei Betätigung der Anpresseinrichtung eine Bewegung des Oberteiles zu verhindern. Diese Verriegelungseinrichtung ist vorzugsweise als manuell handhabbarer Schnellverschluss ausgebildet. Im Betrieb der Vorrichtung wird nach dem Abwärtsverschwenken des Oberteils mit Hilfe dieses manuell betätigbaren Schnellverschlusses eine Verriegelung herbeigeführt. Nach dem erfolgten Schweißvorgang wird wieder manuell entriegelt, so dass das Oberteil aufgeklappt werden kann.

Die Verriegelungseinrichtung weist zweckmäßigerweise einen schwenkbar am Oberteil gelagerten Verrieglungsbügel auf, der in eine am Unterteil verriegelte Stellung verschwenkbar ist. Der Verriegelungsbügel befindet sich vorzugsweise am vorderen Ende des Oberteiles. Mit Hilfe einer Einstelleinrichtung lässt sich der entsprechende Abstand zwischen Oberteil und Unterteil beim Verriegeln einstellen.

Mit "Längsrand" der Folie bzw. der Schrumpfmuffe ist der sich nach dem Herumlegen der Folie um das Rohr in Axialrichtung des Rohres erstreckende Rand gemeint. Es wird daher eine Längsschweißnaht hergestellt.

Die vorliegende Erfindung betrifft ferner ein Verfahren zum Verschweißen der Längsränder einer Schrumpfmuffe mittels Überlappungsstoß in situ bei verlegten Rohrleitungen. Dieses Verfahren umfasst die folgenden Schritte:
a. Herumlegen der entsprechenden Folie um ein Rohr, auf das sie aufgeschrumpft werden soll, mit Abstand zum Rohr, so dass sich die Längsränder der Folie überlappen;
b. Anordnen der sich überlappenden Ränder der Folie zwischen einer unteren und einer oberen Schweißplatte einer auf das Rohr aufgesetzten mobilen Schweißvorrichtung;
c. Pressen der Schweißplatten der Schweißvorrichtung gegeneinander und Erwärmen derselben zum Verschweißen der Folienränder mit Überlappungsstoß; und
d. Entfernen der Schweißvorrichtung von der Schrumpfmuffe in Axialrichtung des Rohres.

Das erfindungsgemäße Verfahren hat den Vorteil, dass zum Aufbringen der Schrumpfmuffe kein Rohrende benötigt wird. Die noch nicht verschweißte Schrumpfmuffe bzw. Folie wird vielmehr um ein verlegtes Rohr bzw. eine Rohrleitung herumgelegt, und erst dann werden die Ränder der Folie bzw. Schrumpfmuffe miteinander verschweißt. Dies geschieht mit Hilfe einer mobilen Schweißvorrichtung, die auf das Rohr aufgesetzt wird. Nach dem Verschweißen der Muffenränder wird die Schweißvorrichtung entfernt, und die Schrumpfmuffe mit aneinander geschweißten Rändern, die im Abstand zur Rohroberfläche angeordnet ist, kann nunmehr an die Stelle der Rohrleitung bewegt werden, an der sie aufgeschrumpft werden soll, beispielsweise eine entsprechende Verbindungsstelle.

Das erfindungsgemäße Verfahren wird vorzugsweise unter Verwendung einer Schweißvorrichtung der vorstehend beschriebenen Art durchgeführt.

Das erfindungsgemäße Verfahren wird vorzugsweise zum Verschweißen einer Schrumpfmuffe aus vernetztem Kunststoff, insbesondere vernetztem Polyethylen, eingesetzt. Bei derartigen Materialien muss eine ausreichende Plastifizierung der Ränder der Schrumpfmuffe durchgeführt werden, um eine sichere Überlappungsverbindung zu erzielen, wozu entsprechende Schweißplatten einer Schweißvorrichtung benötigt werden.

Die Erfindung wird nachfolgend anhand eines Ausführungsbeispiels in Verbindung mit der Zeichnung im Einzelnen erläutert. Es zeigen:
- Figur 1: eine schematische räumliche Darstellung einer Schweißvorrichtung;
- Figur 2: eine schematische räumliche Darstellung der Schweißvorrichtung der Figur 1, wobei das Oberteil der Schweißvorrichtung entfernt ist; und
- Figur 3: einen schematischen Querschnitt durch die Schweißvorrichtung der Figuren 1 und 2 im auf ein Rohr aufgesetzten Zustand.

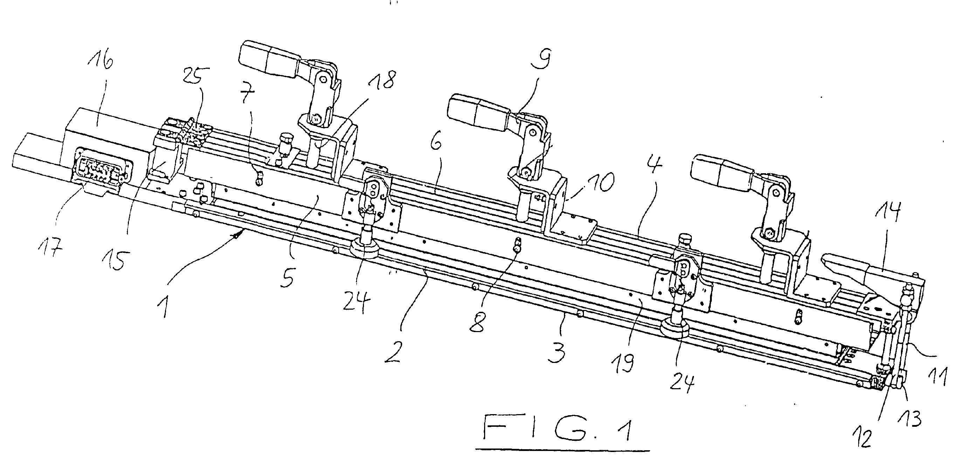

Die in Figur 1 dargestellte mobile Schweißvorrichtung 1 dient zum Verschweißen der Ränder einer Schrumpfmuffe mittels Überlappungsstoß, wobei eine entsprechende Folie lose um ein Rohr, auf das sie aufgeschrumpft werden soll, angeordnet ist. Die Schweißvorrichtung 1 besitzt ein auf das Rohr (in Figur 1 nicht gezeigt) aufsetzbares Gestell mit einem eine untere Schweißplatte 21 tragenden Unterteil 2 und einem schwenkbar an einem Ende des Gestells gelagerten Oberteil 4. Das Oberteil 4 ist über ein Scharnier 25 schwenkbar an einer Stütze 15 gelagert. Die Stütze 15 ist in der Form eines Doppel-T-Elementes ausgebildet und auf das Unterteil 2 aufgeschraubt.

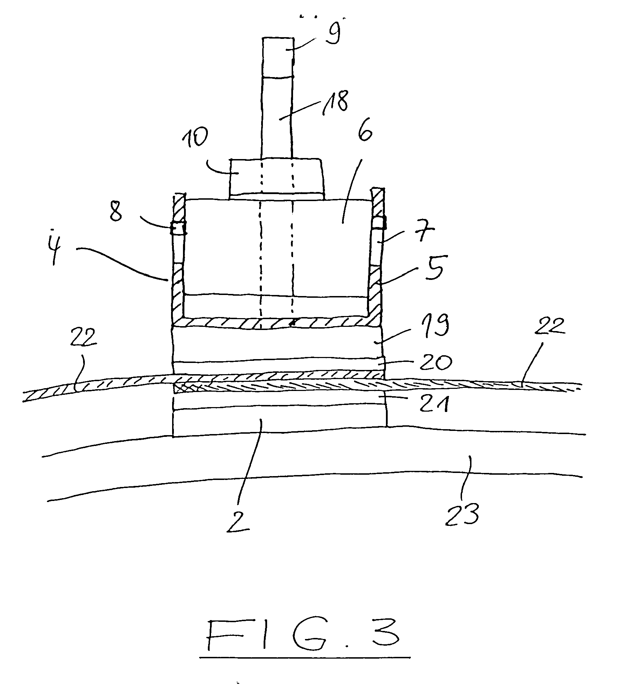

Das Oberteil 4 besitzt ein längliches Hauptteil 6, das an einem Ende über das erwähnte Scharnier 25 schwenkbar an der Stütze 15 gelagert ist. Das Hauptteil 6 befindet sich in einem U-förmigen Element 5 des Oberteiles, an dessen Unterseite eine Pressplatte 19 und eine obere Schweißplatte 20 angeordnet sind, die in Figur 3 schematisch gezeigt sind. Das U-förmige Element 5 mit der an dessen Unterseite angeordneten Pressplatte 19 und der oberen Schweißplatte 20 ist relativ zum Hauptteil 6 auf- und abbewegbar, wobei seitliche Zapfen 8 des Hauptteiles 6 in Führungen 7, die in der Form von Langlöchern ausgebildet sind, des U-förmigen Elementes 5 gelagert sind.

Mit Hilfe von manuell bedienbaren Schwenkhebeln 9 sind entsprechende Stempel 18, die durch Bohrungen des Hauptteiles 6 geführt und mit dem U-förmigen Element 5 verbunden sind, relativ zum Hauptteil 6 nach unten bewegbar, wodurch die aus Kunststoff bestehende Pressplatte 19 zusammengepresst und mit der oberen Schweißplatte 20 gegen die zu verschweißenden Ränder einer Folie 22 und damit gegen die untere Schweißplatte 21 des Unterteiles 2 der Schweißvorrichtung gepresst wird. Durch Verschwenken der Schwenkhebel 9 aus einer vertikalen Stellung in die in Figur 1 dargestellte Horizontalstellung werden daher beide Schweißplattem 20, 21 gegeneinander gepresst, wobei sich die Ränder der zu verschweißenden Schrumpfmuffe dazwischen befinden. Zur Halterung der Schwenkhebel 9 dienen entsprechende Winkel 10, die am Hauptteil 6 befestigt sind und die beweglichen Stempel 18 der Schwenkhebel 9 führen.

Das Unterteil 2 ist mit einer seitlichen Klemmleiste 3 versehen, mit der zwei Niederhalter 24 zusammenwirken. Zum Verschweißen der Ränder der Folie wird der eine Rand derselben über die Klemmleiste 3 gelegt. Durch manuelle Betätigung der Niederhalter 24 werden diese gegen den Längsrand der Folie gepresst, so dass eine Fixierung der Schrumpfmuffe zur Durchführung des Schweißvorganges erreicht wird.

Bei der in Figur 1 dargestellten Ausführungsform sind drei Schwenkhebel bzw. Spannhebel 9 vorgesehen. Ferner besitzt die Schweißvorrichtung eine an einem Ende derselben vorgesehene Verriegelungseinrichtung 11, die ebenfalls am Hauptteil 6 befestigt ist. Bei dieser Verriegelungseinrichtung 11 handelt es sich um einen manuell handhabbaren Schnellverschluss. Durch manuelle Betätigung eines Schwenkhebels 14 ist ein Verriegelungsbügel 12 in eine am Unterteil verriegelte Stellung verschwenkbar, in der der Verriegelungsbügel 12 mit einem Eingriffsteil 13 des Unterteiles 2 zusammenwirkt. Figur 1 zeigt die Verriegelungseinrichtung in der verriegelten Stellung. Durch manuelles Bewegen des Hebels 14 in eine vertikale Stellung wird der Verriegelungsbügel 12 vom Eingriffsteil 13 gelöst, so dass das Oberteil 4 der Vorrichtung relativ zum Unterteil 2 aufgeschwenkt bzw. aufgeklappt werden kann.

Wie ferner Figur 1 zeigt, ist das Unterteil 2 des Gestells gegenüber dem Oberteil 4 nach hinten, d. h. in der Figur nach links, verlängert und trägt an seinem hinteren Ende ein Gehäuse 16, das die Steueranlage für die Vorrichtung aufnimmt. Dieses Gehäuse 16 weist einen entsprechenden Stromanschluss 17 auf. Ferner kann das Gehäuse ein geeignetes Bedienungspaneel (nicht gezeigt) besitzen, mittels dem die entsprechenden Betriebsparameter (Schweißdauer, Schweißtemperatur, Anpressdruck etc.) eingestellt und die Vorrichtung betätigt werden kann (Aufheizen der Schweißplatten etc.).

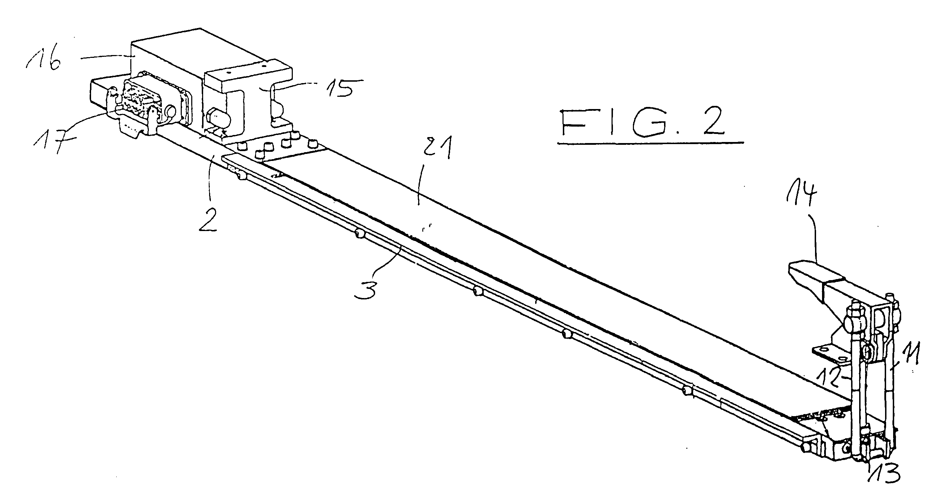

Figur 2 zeigt die Schweißvorrichtung 1 der Figur 1 mit entferntem Oberteil. Man erkennt das Unterteil 2 mit darauf angeordneter Stütze 15, darauf angeordnetem Gehäuse 16 und Stromanschluss 17. An der einen Seite des Unterteiles 2 ist die Klemmleiste 3 zu erkennen. Ferner ist die untere Schweißplatte 21 dargestellt, die sich auf dem Unterteil 2 befindet. Schließlich zeigt Figur 2 die Verriegelungseinrichtung 11 mit Hebel 14, Verriegelungsbügel 12 und Eingriffsteil 13.

Figur 3 zeigt einen schematischen Querschnitt durch die Schweißvorrichtung 1 im Anwendungszustand. Zwischen den beiden Schweißplatten 20 und 21 des Oberteiles 4 und des Unterteiles 2 befinden sich die beiden übereinander angeordneten Längsränder einer Folie 22, die miteinander verschweißt werden sollen. Das U-förmige Element 5 mit Pressplatte 19 und oberer Schweißplatte 20 ist gegenüber dem Hauptteil 6 des Oberteiles 4 abgesenkt und befindet sich im Presszustand gegen die Folie 22 bzw. die untere Schweißplatte 21. In diesem Zustand werden beide Schweißplatten 20, 21 erwärmt, um die Ränder der Folie 22 zumindest teilweise zu plastifizieren und auf diese Weise eine Schweißverbindung als Überlappungsstoß herzustellen.

## Patentansprüche

1. Mobile Vorrichtung (1) zum Verschweißen der Längsränder einer Schrumpfmuffe mittels Überlappungsstoß, wobei eine Folie (22) lose um ein Rohr (23), auf das sie aufgeschrumpft werden soll, angeordnet worden ist, mit einem auf das Rohr (23) aufsetzbaren Gestell mit einem eine untere Schweißplatte (21) tragenden Unterteil (2) und einem schwenkbar an einem Ende des Gestells gelagerten Oberteil (4), das eine obere Schweißplatte (20) trägt, einer am Oberteil (4) angeordneten Anpresseinrichtung zum Anpressen der oberen Schweißplatte (20) gegen die Ränder der Folie (22) und einer am anderen Ende des Gestells angeordneten Einrichtung (11) zum Verriegeln des Oberteils (4) mit dem Unterteil (2).

2. Vorrichtung nach Anspruch 1, **dadurch gekennzeichnet, dass** die Anpresseinrichtung eine relativ zum Oberteil (4) absenkbare und anhebbare Pressplatte (19) umfasst.

3. Vorrichtung nach Anspruch 2, **dadurch gekennzeichnet, dass** die Pressplatte (19) aus elastisch verformbarem Material besteht.

4. Vorrichtung nach einem der vorangehenden Ansprüche, **dadurch gekennzeichnet, dass** die Anpresseinrichtung durch mindestens einen manuell betätigbaren Spannhebel (9) in den Anpresszustand und aus diesem heraus überführbar ist.

5. Vorrichtung nach einem der Ansprüche 2-4, **dadurch gekennzeichnet, dass** das Oberteil (4) ein U-förmiges Element (5) aufweist, das an seiner Unterseite die Pressplatte (19) mit Schweißplatte (20) trägt und relativ zu einem im U-förmigen Element (5) angeordneten Hauptteil (6) des Oberteiles (4) beweglich ist.

6. Vorrichtung nach Anspruch 5, **dadurch gekennzeichnet, dass** das Hauptteil (6) mit seitlichen Zapfen (8) in Schlitzführungen (7) des U-förmigen Elementes (5) gelagert ist.

7. Vorrichtung nach Anspruch 1, **dadurch gekennzeichnet, dass** die Anpresseinrichtung eine durch Beaufschlagung mit einem gasförmigen oder flüssigen Medium dehnbare Einheit umfasst, die beispielsweise eine Vielzahl von dehnbaren Schläuchen aufweist.

8. Vorrichtung nach einem der vorangehenden Ansprüche, **dadurch gekennzeichnet, dass** das Unterteil eine seitliche Schlitzführung zur Durchführung der Folie und zur Anordnung derselben auf der unteren Schweißplatte aufweist.

9. Vorrichtung nach einem der vorangehenden Ansprüche, **dadurch gekennzeichnet, dass** sie seitlich am Oberteil (4) angeordnete Niederhalter (24) für die Folie (22) aufweist, die insbesondere mit einer seitlich am Unterteil (2) angeordneten Klemmschiene (3) zusammenwirken.

10. Vorrichtung nach einem der vorangehenden Ansprüche, **dadurch gekennzeichnet, dass** das Unterteil (2) des Gestells gegenüber dem Oberteil (4) nach hinten verlängert ist und an seinem hinteren Ende ein Gehäuse (16) trägt, das die Steueranlage für die Vorrichtung aufnimmt.

11. Vorrichtung nach einem der vorangehenden Ansprüche, **dadurch gekennzeichnet, dass** das Oberteil (4) an einer am verlängerten Unterteilabschnitt angeordneten Stütze (15) schwenkbar gelagert ist.

12. Vorrichtung nach einem der vorangehenden Ansprüche, **dadurch gekennzeichnet, dass** die Verrieglungseinrichtung (11) als manuell handhabbarer Schnellverschluss ausgebildet ist, insbesondere einen schwenkbar am Oberteil (4) gelagerten Verriegelungsbügel (12) aufweist, der in eine am Unterteil (2) verriegelte Stellung verschwenkbar ist.

13. Verfahren zum Verschweißen der Längsränder einer Schrumpfmuffe mittels Überlappungsstoß in situ bei verlegten Rohrleitungen mit den folgenden Schritten:
a. Herumlegen eine Folie um ein Rohr, auf das sie aufgeschrumpft werden soll, mit Abstand zum Rohr, so dass sich die Längsränder der Schrumpfmuffe überlappen;
b. Anordnen der sich überlappenden Längsränder der Folie zwischen einer unteren und einer oberen Schweißplatte einer auf das Rohr aufgesetzten mobilen Schweißvorrichtung;
c. Pressen der Schweißplatten der Schweißvorrichtung gegeneinander und Erwärmen derselben zum Verschweißen der Muffenränder mit Überlappungsstoß; und
d. Entfernen der Schweißvorrichtung von der Schrumpfmuffe in Axialrichtung des Rohres.

14. Verfahren nach Anspruch 13, **dadurch gekennzeichnet, dass** das Verfahren zum Verschweißen einer Schrumpfmuffe aus vernetztem Kunststoff, insbesondere vernetztem Polyethylen, verwendet wird.

15. Verfahren nach Anspruch 13 oder 14, **dadurch gekennzeichnet, dass** es unter Verwendung einer Schweißvorrichtung nach einem der Ansprüche 1-12 durchgeführt wird.
